# EUROPÄISCHE PATENTANMELDUNG

(11) **EP 4 813 763 A1**
(43) Veröffentlichungstag der Anmeldung: **30.09.2026**
(21) Anmeldenummer: 26168653.9
(22) Anmeldetag: 27.03.2026
(51) Int. Cl.: B60R 22/26

(54) **GURTANORDNUNG UND FAHRZEUGSITZ**

(30) Priorität: 28.03.2025 DE 102025112124
(71) Anmelder: Adient US LLC, Plymouth, MI 48170 (US)
(72) Erfinder: SCHMITZ, Markus Joseph, 42369 Wuppertal (DE); BEDNER, Heinrich, 52379 Langerwehe (DE); PATIL, Paresh Vilas, 411017 Pune, Maharashtra (IN); SOMMERFELD, Felix, 71134 Aidlingen (DE)
(74) Vertreter: Liedtke & Partner Patentanwälte

(57) **Zusammenfassung**

Die Erfindung betrifft eine Gurtanordnung (200) mit einem Gurtband (202), einem Gurtaufroller (212) und einer Gurtaustrittsblende (204), durch die das Gurtband (202) führbar ist, wobei die Gurtaustrittsblende (204) einen Gurtaustrittsbereich (208) und einen Gurteintrittsbereich (214) umfasst, und wobei der Gurteintrittsbereich (214) als eine Umlenkeinheit (216) zum Umlenken eines Gurtbandverlaufs ausgebildet ist, wobei der Gurtaustrittsbereich (208) einen größeren Querschnitt als der Gurteintrittsbereich (214) aufweist.

Die Erfindung betrifft zudem eine Rückenlehne (104) und einen Fahrzeugsitz (100) mit der Rückenlehne (104) und einer solchen Abstandshalter (200).

## Beschreibung

Die Erfindung betrifft eine Gurtanordnung mit den Merkmalen des Oberbegriffs des Anspruchs 1 sowie eine Rückenlehne mit einer solchen Gurtanordnung und einen Fahrzeugsitz mit einer Rückenlehne mit einer solchen Gurtanordnung.

### Stand der Technik

Gurtanordnungen zum Anschnallen eines Nutzers eines Fahrzeugsitzes in einem Fahrzeug sind allgemein bekannt. Aus der DE 10 2022 002 516 A1 ist eine Gurtanordnung mit einem Sicherheitsgurt und einem schlitzförmigen Gurtumlenkelement bekannt.

### Aufgabe

Der Erfindung liegt die Aufgabe zu Grunde, eine Gurtanordnung der eingangs genannten Art, insbesondere hinsichtlich einer variablen Führung des Gurtbandes (auch Sicherheitsgurt genannt), zu verbessern sowie eine entsprechende Rückenlehne und einen entsprechenden Fahrzeugsitz bereitzustellen.

### Lösung

Die erstgenannte Aufgabe wird erfindungsgemäß gelöst durch eine Gurtanordnung mit den Merkmalen des Patentanspruchs 1. Die zweitgenannte Aufgabe wird erfindungsgemäß gelöst durch eine Rückenlehne mit den Merkmalen des Patentanspruchs 11. Die drittgenannte Aufgabe wird erfindungsgemäß gelöst durch einen Fahrzeugsitz mit den Merkmalen des Patentanspruchs 15.

Vorteilhafte Ausgestaltungen, welche einzeln oder in Kombination miteinander eingesetzt werden können, sind Gegenstand der Unteransprüche.

Die erfindungsgemäße Gurtanordnung umfasst ein Gurtband (auch Sicherheitsgurt genannt), einen Gurtaufroller und eine Gurtaustrittsblende, durch die das Gurtband führbar ist, wobei die Gurtaustrittsblende einen nach außen gerichteten Gurtaustrittsbereich und einen nach innen gerichteten Gurteintrittsbereich umfasst, der als eine Umlenkeinheit zum Umlenken eines Gurtbandverlaufs ausgebildet ist. Dabei kann der Gurtaustrittsbereich insbesondere einen größeren Querschnitt als der Gurteintrittsbereich aufweisen. Somit lässt sich die Gurtaustrittsblende einerseits optimal an gegebene Bauteile, insbesondere an den Fahrzeugsitz, anpassen und andererseits ist die Gurtaustrittsblende entsprechend den Sicherheitsvorgaben, insbesondere hinsichtlich eines kopfaufschlagoptimierten Aufbaus, einfach und sicher aufgebaut und ausgebildet. Gleichzeitig ermöglicht eine solche Gurtaustrittsblende mit integrierter Umlenkeinheit eine zuverlässige und sichere sowie optimale Führung des Gurtbandes auch bei unterschiedlich großen Nutzern des Fahrzeugsitzes.

Insbesondere kann zwischen dem Gurteintrittsbereich und dem Gurtaustrittsbereich ein Gurtdurchtrittsbereich angeordnet oder ausgebildet sein.

Für eine optimale und sichere, insbesondere kopfaufschlagoptimierte Führung des Gurtbandes kann das Gurtband beispielsweise im Gurteintrittsbereich mittels der Umlenkeinheit definiert und in Auflage umlenkbar oder umgelenkt sein oder werden.

Zusätzlich kann vorgesehen sein, dass das Gurtband im Gurtaustrittsbereich auflagefrei und reibungslos führbar oder geführt ist oder wird und/oder in dem Gurtdurchtrittsbereich definiert und reibungsarm führbar oder geführt ist oder wird.

Beispielsweise kann sich der Gurtdurchtrittsbereich im Längsschnitt der Gurtaustrittsblende trichterförmig öffnen. Zusätzlich können der Gurteintrittsbereich, der Gurtdurchtrittsbereich und der Gurtaustrittsbereich jeweils im Querschnitt schlitzförmig und mit variierender Querschnittsgröße ausgebildet sein.

Beispielsweise kann die Gurtaustrittsblende, zum Beispiel im Gurteintrittsbereich, im Gurtdurchtrittsbereich und/oder im Gurtaustrittsbereich, außenseitig mit einer Stützstruktur versehen sein. Insbesondere kann die Gurtaustrittsblende, insbesondere der Gurteintrittsbereich, der Gurtdurchtrittsbereich und/oder der Gurtaustrittsbereich, außenseitig mit einer Rippenstruktur und/oder Verstärkungen versehen sein. Innenseitig kann die Gurtaustrittsblende hinsichtlich einer Führung des Gurtbandes optimiert, insbesondere mit einer Gleitfläche, insbesondere einer reibungsfreien oberen Innenschicht, ausgestaltet sein. Mit anderen Worten: Eine Innenfläche der Gurtaustrittsblende kann als eine Gleitfläche ausgebildet und/oder eine Außenfläche der Gurtaustrittsblende kann mit der Stützstruktur versehen sein.

Insbesondere kann der Gurteintrittsbereich im Schnitt eine abgewinkelte oder bogenförmige Eintrittskante umfassen. Die Eintrittskante kann insbesondere einen Gurtumlenkbereich und/oder einen Gurtauflagepunkt bilden. Hierdurch kann in einfacher Art und Weise das Gurtband in seinem Verlauf von dem Gurtaufroller in Richtung des Gurtaustrittsbereichs oder umgekehrt vom Gurtaustrittsbereich in Richtung des Gurtaufrollers umgelenkt werden. Insbesondere kann der Gurteintrittsbereich, ausgebildet als Umlenkeinheit, gleichzeitig eine Freimachung für eine Einfädelbewegung, Aufrollbewegung, Einrollbewegung und/oder Schwenkbewegung des Gurtbands in der Gurtaustrittsblende bilden.

Die Gurtanordnung kann zusätzlich beispielsweise einen Abstandshalter für die Gurtaustrittsblende aufweisen. Der Abstandshalter kann insbesondere eingerichtet sein, die Gurtaustrittsblende lösbar und in einer vorgegebenen Position zu halten. Insbesondere sind der Abstandshalter und die Gurtaustrittsblende derart zueinander eingerichtet und positioniert, dass der die Umlenkeinheit bildende Gurteintrittsbereich außerhalb einer Kopfaufschlagzone angeordnet ist. Hierdurch kann der Abstandshalter entsprechend stabil und fest, beispielsweise aus Metall, gebildet sein, um hohe Kräfte aufnehmen zu können. Mittels des Abstandshalters kann der Gurteintrittsbereich einen vorderen Umlenkpunkt der Gurtanordnung bilden. Der den vorderen Umlenkpunkt bildende Gurteintrittsbereich ist in Bezug auf die Gurtaustrittsblende ein hinterer Bereich oder in Bezug auf eine Rückenlehne ein innenliegender Bereich. Demgegenüber bildet der Gurtaustrittsbereich in Bezug auf die Gurtaustrittsblende einen vorderen Bereich oder in Bezug auf die Rückenlehne einen vorderen und bereichsweise zumindest äußeren Bereich.

Beispielsweise können sich der Gurtaustrittsbereich und der Gurteintrittsbereich in Form und/oder Abmessungen unterscheiden. Zum Beispiel kann der Gurteintrittsbereich schlitzförmig ausgebildet sein. Dadurch ist ein Verklemmen oder ein Verdrehen des Gurtbandes bei dessen Einführen in die Gurtaustrittsblende reduziert oder gar vermieden. Der Gurtaustrittsbereich weist insbesondere größere Abmessungen als der Gurteintrittsbereich auf. Beispielsweise kann der Gurtaustrittsbereich im Wesentlichen als ein größerer Schlitz als der Schlitz des Gurteintrittsbereichs ausgebildet sein. Insbesondere kann der Gurtaustrittsbereich in der Breite gleich groß oder weitgehend identisch und in der Höhe größer als der Gurteintrittsbereich ausgebildet sein. Hierdurch ist die Gurtaustrittsblende in einfacher Art und Weise für verschieden große Nutzer des Fahrzeugsitzes mit einer solchen Gurtanordnung nutzbar.

Beispielsweise kann die Gurtaustrittsblende eingerichtet sein, dass das Gurtband mit unterschiedlich großen Erstreckungswinkeln relativ zu dem Gurtumlenkbereich und/oder zu dem Gurtauflagepunkt, insbesondere einem unteren Gurtumlenkbereich und/oder einem unteren Gurtauflagepunkt, aus dem Gurtaustrittsbereich austritt. Die Gurtaustrittsblende kann beispielsweise für einen Erstreckungswinkel in einem Bereich von größer 0° bis 45° eingerichtet sein. Insbesondere kann hierzu ein unterer Gurtaustrittsbereich schräg, insbesondere mit einem Neigungswinkel von größer 0° bis 45°, relativ zu dem Gurtumlenkbereich oder dem Gurtauflagepunkt und/oder relativ zu einem oberen Gurtaustrittsbereich, der gerade verläuft oder sich gerade erstreckt, verlaufen. Insbesondere weist die Gurtaustrittsblende einen unteren Gurtumlenkpunkt auf. Ein solcher unterer, insbesondere niedriger, Gurtumlenkpunkt ermöglicht in einem Gurtzug-Lastfall eine Reduzierung eines daraus resultierenden, auf die Sitzstruktur einwirkenden Lastmoments.

Darüber hinaus kann die Gurtaustrittsblende eingerichtet sein, das Gurtband, insbesondere in dem entsprechenden Gurtumlenkbereich und/oder in dem Gurtauflagepunkt, zu stützen. Beispielsweise ist die Gurtaustrittsblende im Bereich des Gurtumlenkbereichs und/oder des Gurtauflagepunktes mit einer entsprechenden Stützstruktur, insbesondere einer Rippenstruktur und/oder einer Verstärkung, versehen. Dabei kann die Stützstruktur derart ausgebildet sein, dass diese sich auf den Abstandshalter abstützt und/oder an diesem abstützend anliegt.

Zusätzlich kann eine Seite, insbesondere eine Unterseite, der Gurtaustrittsblende eine Montageausnehmung, zum Beispiel einen durchgehenden Schlitz, zur Montage oder Demontage des Gurtbandes in die Gurtaustrittsblende umfassen. Die Montageausnehmung, zum Beispiel ein durchgehender Schlitz, ist insbesondere derart bemessen, dass das Gurtband von außen im Wesentlichen vertikal in die Gurtaustrittsblende einführbar ist oder eingeführt werden kann und innen in der Gurtaustrittsblende in eine horizontale Gebrauchslage drehbar ist oder gedreht werden kann.

Beispielsweise können der Gurteintrittsbereich und der Gurtaustrittsbereich miteinander verbunden sein. Beispielsweise ist zwischen dem Gurteintrittsbereich und dem Gurtaustrittsbereich der Gurtdurchtrittsbereich der Gurtaustrittsblende gebildet. Insbesondere ist die Gurtaustrittsblende als ein dreidimensionaler, insbesondere langgestreckter, Formkörper, insbesondere als ein dreidimensionaler Spritzgussformkörper, ausgebildet.

Vorzugsweise kann die Gurtaustrittsblende, insbesondere deren Gurtdurchtrittsbereich, trichterförmig und/oder im Schnitt v-förmig ausgebildet sein. Beispielsweise verläuft ein oberer Gurtdurchtrittsbereich gerade und ein unterer Gurtdurchtrittsbereich schräg zu dem oberen Gurtdurchtrittsbereich.

Die erfindungsgemäße Rückenlehne umfasst die zuvor beschriebene Gurtanordnung.

Der erfindungsgemäße Fahrzeugsitz umfasst die zuvor beschriebene Rückenlehne mit der zuvor beschriebenen Gurtanordnung. Dabei kann die Gurtaustrittsblende bündig oder plan mit einer Vorderseite des Fahrzeugsitzes, insbesondere einer Vorderseite der Rückenlehne, abschließen. Insbesondere ist die Gurtaustrittsblende unterhalb einer Oberkante des Fahrzeugsitzes, insbesondere unterhalb einer Oberseite einer Rückenlehne, in diesen derart integriert, dass ein den Gurtaustrittsbereich umlaufender abgewinkelter Rand bündig oder plan mit der Vorderseite des Fahrzeugsitzes, insbesondere der Vorderseite der Rückenlehne, abschließt.

Hierdurch ist die Gurtanordnung kopfaufschlagoptimiert in den Fahrzeugsitz integriert. Dabei ist die Gurtanordnung außerhalb einer Kopfaufschlagzone gemäß ECE-R17 (Economic Commission for Europe, ECE-Homologation, Prüfverfahren für Sitze und Kopfstützen) und ECE-R21 (Bestimmungen zur Gestaltung der Innenausstattung eines Fahrzeugs) angeordnet und in die Rückenlehne integriert.

Die Rückenlehne umfasst zumindest eine Anbindungsstelle, an welcher ein Abstandshalter für die Gurtaustrittsblende angebracht ist. Die Anbindungsstelle ist beispielsweise in einem oberen Rückenlehnenbereich zwischen einer Außenkante und einer Kopfstützenhalterung ausgebildet.

Insbesondere kann der Abstandshalter senkrecht oder nahezu senkrecht von der Rückenlehne, insbesondere nach vorne gerichtet, abstehen und an dieser befestigt sein. Mittels eines solchen von der Rückenlehne senkrecht nach vorne oder nahezu senkrecht nach vorne abstehenden Abstandshalters kann sichergestellt werden, dass der als Umlenkeinheit ausgebildete Gurteintrittsbereich, insbesondere der Gurtumlenkbereich und/oder deren Gurtumlenkpunkt, der Gurtaustrittsblende zur Rückenlehnenebene nach vorne versetzt angeordnet ist. Mit anderen Worten: Der Gurtumlenkbereich und/oder der Gurtumlenkpunkt sind/ist mittels des Abstandshalters nach vorne versetzt und zur Rückenlehne beabstandet angeordnet.

Beispielsweise kann der Abstandshalter als ein U-förmiger Abstandsbügel oder als zwei L-förmige Abstandsarme ausgebildet sein. Zusätzlich kann der Abstandshalter als Abstützung dienen. Hierzu kann der Abstandshalter beispielsweise hinreichend fest und stabil ausgebildet sein. Beispielsweise kann der Abstandshalter aus Metall gefertigt sein. Die Gurtaustrittsblende kann insbesondere aus einem Kunststoffmaterial gefertigt sein.

Zusätzlich kann der Abstandshalter eine vordere Aufnahme aufweisen, die eingerichtet ist, den Gurteintrittsbereich der Gurtaustrittsblende lösbar zu halten. Insbesondere können der Abstandshalter und die Gurtaustrittsblende zueinander korrespondierende Verbindungselemente, insbesondere Rastelemente, zum Beispiel Rasthaken und Rastaufnahmen, Klipselemente, zum Beispiel flexible Klipsarme und Klipsaufnahme, oder dergleichen aufweisen. Gleichzeitig kann der Abstandshalter zur Stützung des Gurteintrittsbereichs korrespondierend in Form, Abmessung und/oder Größe entsprechend ausgebildet sein.

Insbesondere ist durch die auf der Vorderseite integrierte Gurtaustrittsblende bei einer Anordnung von mehreren Fahrzeugsitzen hintereinander ein Aufschlagen eines Kopfes eines Nutzers eines hinteren Fahrzeugsitzes auf diese vordere Gurtaustrittsblende sicher vermieden. Gleichzeitig ermöglicht die Ausgestaltung des Gurtaustrittsbereichs mit dem variablen Führungsbereich für das Gurtband eine Nutzung des Fahrzeugsitzes für verschieden große Insassen. Darüber hinaus ermöglicht die integrierte Umlenkeinheit eine schräge Anbindung des Gurtbandes vom Gurtaufroller in die Gurtaustrittsblende. Hierdurch werden entsprechende Gurtabzugskriterien des Gurtaufrollers einfach und sicher erfüllt. Der Gurtaufroller ist insbesondere innerhalb des Fahrzeugsitzes unterhalb der Gurtaustrittsblende und versetzt zu dieser für einen schrägen Verlauf des Gurtbandes vom Gurtaufroller zum Gurteintrittsbereich der Gurtaustrittsblende angeordnet. Vorzugsweise ist der Gurtaufroller in einem Gehäuse angeordnet, das eine obere Ausgangsöffnung für das Gurtband aufweist. Dabei kann die Gurtaustrittsblende lösbar an der oberen Ausgangsöffnung befestigbar, insbesondere klemmbar oder klipsbar angeordnet sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung,
- Fig. 2:: eine perspektivische Ansicht einer Sitzanordnung in einem Fahrzeug mit einem erfindungsgemäßen Fahrzeugsitz mit einer erfindungsgemäßen Gurtanordnung,
- Fig. 3:: eine Vorderansicht auf eine Sitzreihe mit dem erfindungsgemäßen Fahrzeugsitz mit der erfindungsgemäßen Gurtanordnung,
- Fig. 4:: eine schematische Darstellung einer Gurtanordnung, integriert in einem oberen Bereich einer Rückenlehne eines Fahrzeugsitzes und mit einer bündig auf einer Vorderseite der Rückenlehne integrierten Gurtaustrittsblende,
- Fig. 5:: eine Schnittdarstellung des Fahrzeugsitzes durch eine Gurtanordnung des Fahrzeugsitzes,
- Fig. 6:: schematisch eine vergrößerte perspektivische Ansicht einer Rückenlehne von vorne ohne Polsterung und im Bereich der sitzintegrierten Gurtanordnung mit Gurtaustrittsblende und Gurtaufroller,
- Fig. 7:: schematisch eine vergrößerte perspektivische Ansicht einer Rückenlehne von hinten ohne Polsterung und im Bereich der sitzintegrierten Gurtanordnung mit Gurtaustrittsblende und Gurtaufroller, und
- Fig. 8:: schematisch eine vergrößerte Draufsicht auf die Rückenlehne ohne Polsterung und auf die Gurtaustrittsblende.

Einander entsprechende Teile sind in allen Figuren mit den gleichen Bezugszeichen versehen.

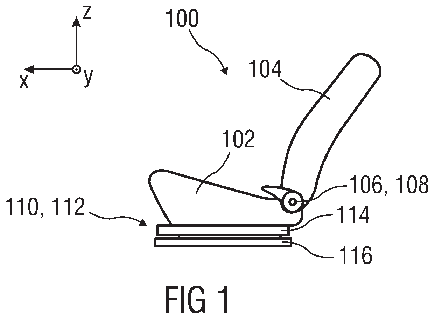

Ein in der Figur 1 schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

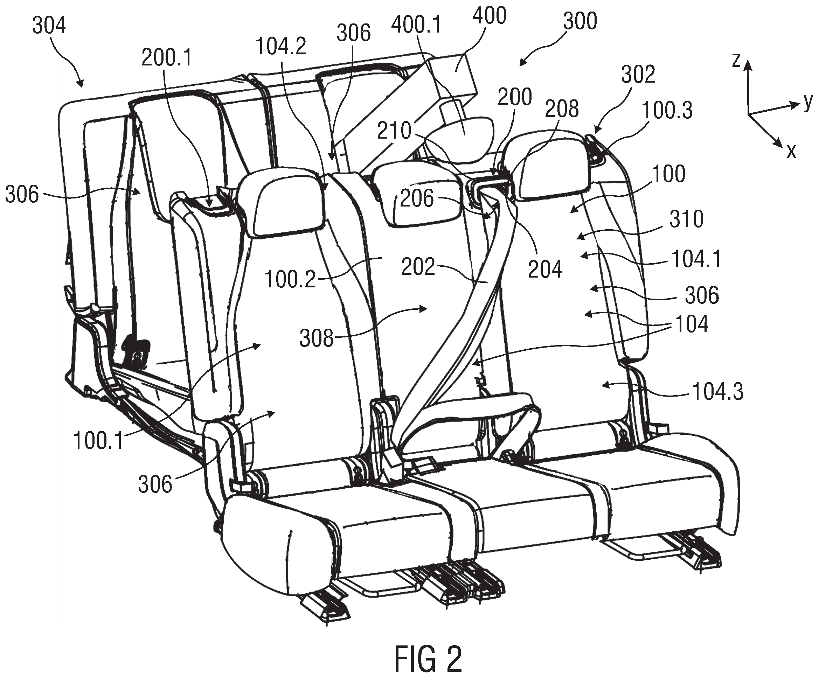

Der Fahrzeugsitz 100 kann eine erfindungsgemäße Gurtanordnung 200, wie sie nachfolgend anhand der Figuren 2 bis 8 beschrieben wird, umfassen.

Figur 2 zeigt eine perspektivische Ansicht einer Sitzanordnung 300 in einem Fahrzeug mit dem erfindungsgemäßen Fahrzeugsitz 100 mit der erfindungsgemäßen Gurtanordnung 200.

Die Sitzanordnung 300 umfasst beispielsweise eine vordere Sitzreihe 302 und eine hintere Sitzreihe 304.

Die hintere Sitzreihe 304 weist beispielsweise eine sogenannte Sitzteilung 60-60 mit zwei breiten Sitzflächen 306 auf. Alternativ kann die hintere Sitzreihe 304 auch eine 60-40-Sitzteilung oder eine 40-20-40-Sitzteilung aufweisen. Die vordere Sitzreihe 302 weist beispielsweise eine sogenannte Sitzteilung von 60-40-60 mit zwei breiten Sitzflächen 306 und einer mittleren schmalen Sitzfläche 308 auf. Hierdurch kann beispielsweise eine Rückenlehnenfläche 310 in einem Verhältnis von 60 zu 40 umgeklappt werden. Durch diese Teilung kann ein Teil der Rückenlehnenfläche 310, insbesondere eine der Rückenlehnen 104 der breiten Sitzfläche 306 oder der schmalen Sitzfläche 308, umgelegt werden, während der andere weiterhin als Sitzplatz zur Verfügung steht. Alternativ kann die vordere Sitzreihe 302 eine 50-50-Sitzteilung oder eine 60-40-Sitzteilung aufweisen.

Der rechte Fahrzeugsitz 100 der vorderen Sitzreihe 302 weist die erfindungsgemäße Gurtanordnung 200 auf. Der linke Fahrzeugsitz 100.1 der vorderen Sitzreihe 302 weist eine herkömmliche Gurtanordnung 200.1 auf.

Die Gurtanordnung 200 ist als eine sitzintegrierte, erfindungsgemäße Gurtanordnung 200 ausgebildet. Die Gurtanordnung 200 umfasst ein Gurtband 202 (auch Sicherheitsgurt genannt), mittels welchem ein Nutzer des mittleren Fahrzeugsitzes 100.2 angeschnallt und gesichert werden kann. Die Gurtanordnung 200 umfasst für eine Führung und zum Austritt des Gurtbandes 202 eine Gurtaustrittsblende 204, die auf einer Vorderseite 104.1 der Rückenlehne 104 bündig oder plan angeordnet ist.

Der linke Fahrzeugsitz 100.1 weist eine herkömmliche Gurtanordnung 200.1 auf, welche auf einer Oberseite 104.2 der Rückenlehne 104 bündig in diese integriert ist.

Gegenüber der herkömmlichen Gurtanordnung 200.1 ist die erfindungsgemäße Gurtanordnung 200 kopfaufschlagoptimiert. Insbesondere bei einem Unfall kann ein Insasse 400 (dargestellt als Dummy) der hinteren Sitzreihe 304 mit seinem Kopf 400.1 (dargestellt als Aufschlagkugel) auf die Oberseite 104.2 der Rückenlehne 104 der vorderen Sitzreihe 302 aufprallen. Durch die Anordnung der erfindungsgemäßen Gurtanordnung 200 auf der Vorderseite 104.1 der Rückenlehne 104 prallt der Kopf 400.1 auf eine Polsterung 104.3 des Fahrzeugsitzes 100 und nicht auf die nach vorne gerichtete Gurtaustrittsblende 204 der Gurtanordnung 200. Hierdurch ist eine Verletzungsgefahr deutlich reduziert. Die Gurtaustrittsblende 204 kann zusätzlich zur vorderseitig in die Rückenlehne 104 integrierten Anordnung beispielsweise eingerichtet sein, dass das Gurtband 202 mit unterschiedlich großen Erstreckungswinkeln 206 aus einem, insbesondere vorderen, Gurtaustrittsbereich 208 austritt.

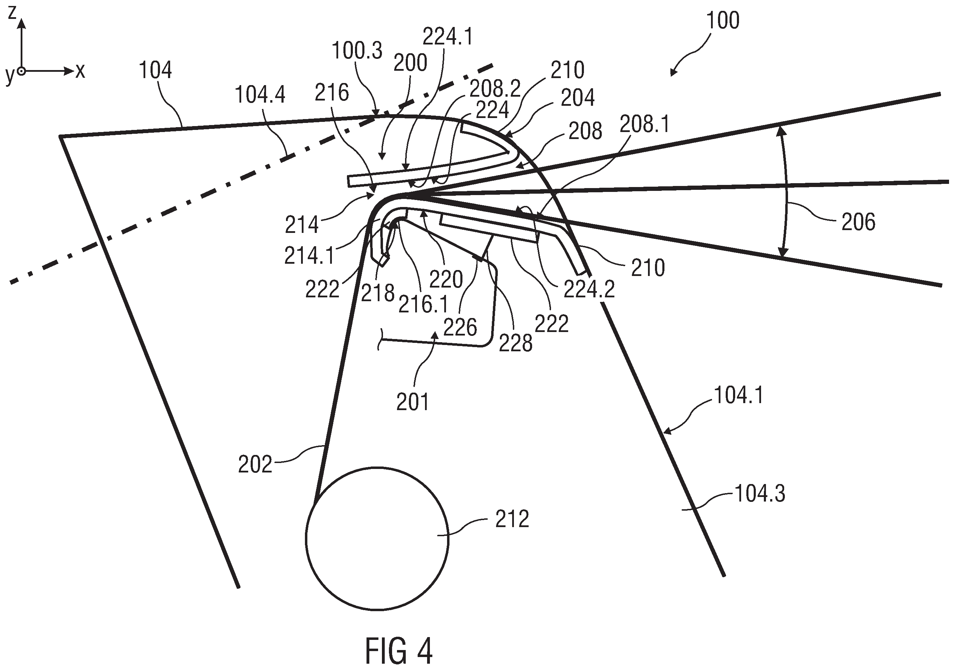

Hierzu kann der, insbesondere vordere, Gurtaustrittsbereich 208 einen größeren Querschnitt als ein, insbesondere hinterer, Gurteintrittsbereich 214 (dargestellt in Figur 4) aufweisen. Unter dem Gurtaustrittsbereich 208 wird insbesondere der nach vorne oder nach außen gerichtete Bereich der Gurtaustrittsblende 204 verstanden, aus welcher das Gurtband 202 zum Beispiel zum Anlegen heraustritt und gegriffen werden kann. Unter dem Gurteintrittsbereich 214 wird insbesondere jener Bereich der Gurtaustrittsblende 204 verstanden, durch welchen das Gurtband 202 zum Beispiel von einem Gurtaufroller 212 (dargestellt in Figur 4) in die Gurtaustrittsblende 204 einführt wird.

Dabei kann das Gurtband 202 in einem zwischen dem Gurteintrittsbereich 214 und dem Gurtaustrittsbereich 208 vorgesehenen und/oder ausgebildeten Gurtdurchtrittsbereich 224 (dargestellt in Figur 4) reibungsarm und insbesondere definiert führbar oder geführt sein oder werden. Beispielsweise kann sich der Gurtdurchtrittsbereich 224 im Längsschnitt der Gurtaustrittsblende 204 trichterförmig öffnen.

Zusätzlich können der Gurteintrittsbereich 214, der Gurtdurchtrittsbereich 224 und der Gurtaustrittsbereich 208 jeweils im Querschnitt schlitzförmig und mit variierender Querschnittsgröße ausgebildet sein, wie in Figur 4 dargestellt.

Die Gurtaustrittsblende 204 kann beispielsweise für einen Erstreckungswinkel 206 in einem Bereich von größer 0° bis 45° eingerichtet sein.

Zusammenfassend ist die Gurtanordnung 200 durch deren auf der Vorderseite 104.1 integrierte Anordnung kopfaufschlagoptimiert in den Fahrzeugsitz 100 integriert und zusätzlich aufgrund eines variablen Gurtaustrittsbereichs 208 mit unterschiedlich großen Erstreckungswinkeln 206 für unterschiedlich große Nutzer des Fahrzeugsitzes 100 nutzbar. Insbesondere ist durch die auf der Vorderseite 104.1 integrierte Gurtaustrittsblende 204 bei einer Anordnung von mehreren Fahrzeugsitzen 100 hintereinander ein Aufschlagen des Kopfes 400.1 sicher vermieden.

Die erfindungsgemäße Gurtaustrittsblende 204 schließt insbesondere bündig oder plan mit der Vorderseite 104.1 des Fahrzeugsitzes 100, insbesondere der Rückenlehne 104, ab. Insbesondere ist die Gurtaustrittsblende 204 unterhalb einer Oberkante 100.3 des Fahrzeugsitzes 100, insbesondere unterhalb der Oberseite 104.2 der Rückenlehne 104, in diese Rückenlehne 104 derart integriert, dass ein den Gurtaustrittsbereich 208 umlaufender abgewinkelter Rand 210 bündig oder plan mit der Vorderseite 104.1 der Rückenlehne 104 abschließt.

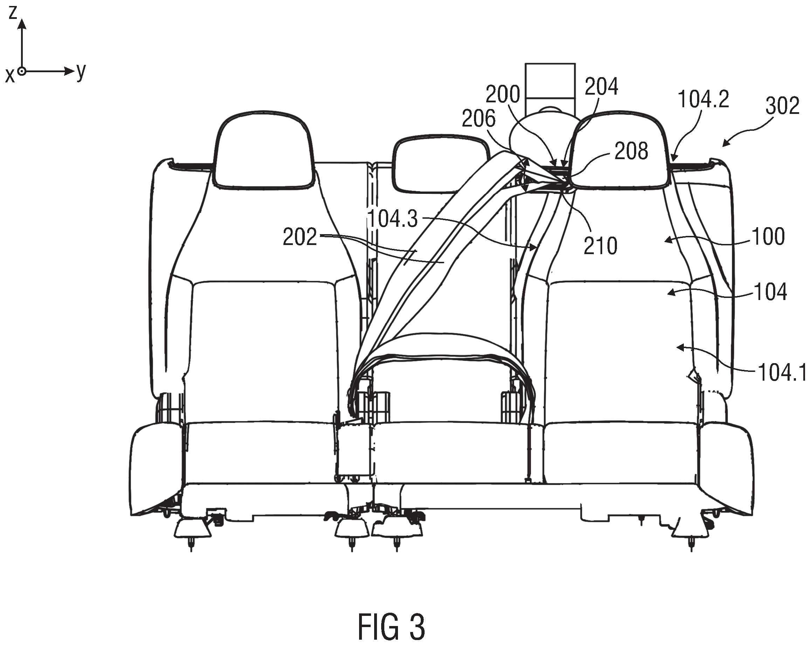

Figur 3 zeigt eine Draufsicht auf die vordere Sitzreihe 302 mit dem erfindungsgemäßen Fahrzeugsitz 100 mit der erfindungsgemäßen Gurtanordnung 200.

Das Gurtband 202 tritt mit einem variablen Erstreckungswinkel 206 aus dem Gurtaustrittsbereich 208 der Gurtaustrittsblende 204 aus.

Der Rand 210 schließt insbesondere bündig oder plan mit der Vorderseite 104.1 der Rückenlehne 104 ab. Die Gurtaustrittsblende 204 ist unterhalb der Oberseite 104.2 der Rückenlehne 104, in diese Rückenlehne 104 auf deren Vorderseite 104.1, insbesondere in die Polsterung 104.3, derart integriert, dass der umlaufende Rand 210 des Gurtaustrittsbereichs 208 bündig oder plan mit der Vorderseite 104.1 abschließt.

Figur 4 zeigt eine schematische Darstellung der Gurtanordnung 200, integriert in dem oberen Bereich der Rückenlehne 104 und mit der bündig auf der Vorderseite 104.1 der Rückenlehne 104 integrierten Gurtaustrittsblende 204.

Die Gurtanordnung 200 ist unterhalb einer Aufschlagzone 104.4 in die Rückenlehne 104 integriert.

Die Gurtanordnung 200 kann zusätzlich beispielsweise einen Abstandshalter 201 für die Gurtaustrittsblende 204 aufweisen. Der Abstandshalter 201 kann insbesondere eingerichtet sein, die Gurtaustrittsblende 204 in einer vorgegebenen, insbesondere in einer vorderen und unteren, Position zu halten, die außerhalb der Aufschlagzone 104.4 liegt.

Die Gurtanordnung 200 umfasst einen Gurtaufroller 212 und die Gurtaustrittsblende 204, durch die das vom/auf den Gurtaufroller 212 wickelbare Gurtband 202 führbar ist.

Die Gurtaustrittsblende 204 umfasst einen Gurtaustrittsbereich 208 und einen Gurteintrittsbereich 214. Der Gurteintrittsbereich 214 ist als eine Umlenkeinheit 216 zum Umlenken eines Gurtbandverlaufs des Gurtbandes 202 ausgebildet.

Insbesondere sind der Abstandshalter 201 und die Gurtaustrittsblende 204 derart zueinander eingerichtet und positioniert, dass der die Umlenkeinheit 216 bildende Gurteintrittsbereich 214 außerhalb der Aufschlagzone 104.4, insbesondere einer Kopfaufschlagzone, angeordnet ist. Hierdurch kann der Abstandshalter 201 entsprechend stabil und fest, beispielsweise aus Metall, gebildet sein, um hohe Kräfte aufnehmen zu können.

Mittels des Abstandshalters 201 kann der Gurteintrittsbereich 214 einen vorderen Umlenkpunkt 216.1 der Gurtanordnung 200 bilden. Zusätzlich bildet der Gurteintrittsbereich 214 einen unteren Umlenkpunkt 216.1. Durch die Ausbildung des Umlenkpunktes 216.1 als ein unterer Umlenkpunkt 216.1 kann das auf die Rückenlehne 104 einwirkende Moment bei einem Gurtzug-Lastfall verringert werden.

Der den vorderen, unteren Umlenkpunkt 216.1 bildende Gurteintrittsbereich 214 ist in Bezug auf die Gurtaustrittsblende 204 ein hinterer Bereich oder in Bezug auf eine Rückenlehne 104 ein innenliegender vorderer Bereich. Demgegenüber bildet der Gurtaustrittsbereich 208 in Bezug auf die Gurtaustrittsblende 204 einen vorderen Bereich oder in Bezug auf die Rückenlehne 104 einen vorderen und bereichsweise zumindest äußeren Bereich.

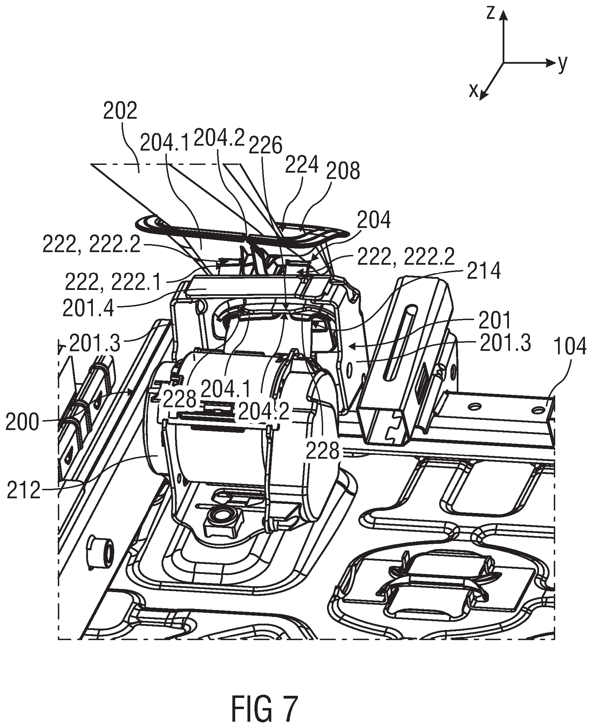

Der Abstandshalter 201 kann zusätzlich eingerichtet sein, die Gurtaustrittsblende 204 lösbar zu halten, wie in Figur 7 im Detail gezeigt. Die Gurtaustrittsblende 204 kann zusätzlich zur vorderseitig in die Rückenlehne 104 integrierten Anordnung beispielsweise eingerichtet sein, dass das Gurtband 202 mit unterschiedlich großen Erstreckungswinkeln 206 relativ zu einem Gurtumlenkbereich 218 und/oder zu einem Gurtauflagepunkt 220, insbesondere einem unteren Gurtumlenkbereich 218 und/oder einem unteren Gurtauflagepunkt 220, aus dem Gurtaustrittsbereich 208 austritt. Die Gurtaustrittsblende 204 kann beispielsweise für einen Erstreckungswinkel 206 in einem Bereich von größer 0° bis 45° eingerichtet sein. Insbesondere wird ein solcher Bereich des Erstreckungswinkels 206 für das austretende Gurtband 202 mittels Form und/oder Abmessungen der Gurtaustrittsblende 204 eingerichtet, dass Insassen 400 mit unterschiedlichen Körpergrößen, insbesondere getestet mit sogenannten Dummygrößen von 5% bis 95%, abgedeckt sind.

Somit ist die Gurtaustrittsblende 204 einerseits optimal an gegebene Bauteile, insbesondere an den Fahrzeugsitz 100, angepasst. Andererseits ist hierdurch die Gurtaustrittsblende 204 an Sicherheitsvorgaben, insbesondere hinsichtlich eines kopfaufschlagoptimierten Aufbaus gemäß ECE-R17 und ECE-R21, einfach und sicher gestaltet. Insbesondere ermöglicht eine solche Gurtaustrittsblende 204 mit integrierter Umlenkeinheit 216 eine zuverlässige und sichere sowie optimale Führung des Gurtbandes 202 auch bei unterschiedlich großen Nutzern des Fahrzeugsitzes 100. Die Gurtanordnung 200 weist zudem weniger Bauteile auf und ist einfach zu montieren oder zu demontieren.

Zusätzlich kann/können die Gurtaustrittsblende 204 im Gurteintrittsbereich 214 und/oder im Gurtaustrittsbereich 208 außenseitig mit einer Stützstruktur 222 versehen sein.

Insbesondere kann der Gurteintrittsbereich 214 im Schnitt eine abgewinkelte oder bogenförmige Eintrittskante 214.1 umfassen. Hierdurch kann in einfacher Art und Weise das Gurtband 202 in seinem Verlauf von dem Gurtaufroller 212 in Richtung des Gurtaustrittsbereichs 208 oder umgekehrt vom Gurtaustrittsbereich 208 in Richtung des Gurtaufrollers 212 umgelenkt werden.

Beispielsweise können sich der Gurtaustrittsbereich 208 und der Gurteintrittsbereich 214 in Form und/oder Abmessungen unterscheiden. Zum Beispiel kann der Gurteintrittsbereich 214 schlitzförmig ausgebildet sein. Dadurch ist ein Verklemmen oder ein Verdrehen des Gurtbandes 202 bei dessen Einführen in die Gurtaustrittsblende 204 reduziert oder gar vermieden.

Der Gurtaustrittsbereich 208 weist insbesondere größere Abmessungen als der Gurteintrittsbereich 214 auf.

Beispielsweise kann die Gurtaustrittsblende 204 eingerichtet sein, dass das Gurtband 202 mit unterschiedlich großen Erstreckungswinkeln 206 relativ zu dem Gurtumlenkbereich 218 und/oder zu dem Gurtauflagepunkt 220 aus dem Gurtaustrittsbereich 208 austritt. Insbesondere kann hierzu ein unterer Gurtaustrittsbereich 208.1 schräg, insbesondere mit einem Neigungswinkel von größer 0° bis 45°, relativ zu dem Gurtumlenkbereich 218 und/oder dem Gurtauflagepunkt 220 und/oder relativ zu einem oberen Gurtaustrittsbereich 208.2, der gerade verläuft oder sich gerade erstreckt, verlaufen.

Der Gurtumlenkbereich 218 und/oder der Gurtauflagepunkt 220 sind insbesondere derart an der Gurtaustrittsblende 204 eingerichtet oder bereitgestellt, dass ein unterer, insbesondere niedriger, Gurtumlenkpunkt gebildet ist, der in einem Gurtzug-Lastfall ein auf die Sitzstruktur einwirkendes Lastmoment reduziert.

Beispielsweise können der Gurteintrittsbereich 214 und der Gurtaustrittsbereich 208 miteinander verbunden sein und einen Gurtdurchtrittsbereich 224 der Gurtaustrittsblende 204 bilden.

Insbesondere ist die Gurtaustrittsblende 204 als ein dreidimensionaler Formkörper, insbesondere als ein dreidimensionaler Kunststoffformkörper, zum Beispiel ein Spritzgussformkörper, ausgebildet.

Vorzugsweise kann der Gurtdurchtrittsbereich 224 trichterförmig und/oder im Schnitt v-förmig ausgebildet sein. Beispielsweise verläuft ein oberer Gurtdurchtrittsbereich 224.1 gerade und ein unterer Gurtdurchtrittsbereich 224.2 schräg zu dem oberen Gurtdurchtrittsbereich 224.1.

Die Gurtaustrittsblende 204 ist unterhalb der Oberkante 100.3 des Fahrzeugsitzes 100 in diesen derart integriert, dass der den Gurtaustrittsbereich 208 umlaufende abgewinkelte Rand 210 bündig oder plan mit der Vorderseite 104.1 des Fahrzeugsitzes 100, insbesondere dessen Rückenlehne 104, abschließt.

Der Gurtaufroller 212 ist unterhalb der Gurtaustrittsblende 204 und schräg versetzt zu dieser in den Fahrzeugsitz 100, insbesondere in die Polsterung 104.3, integriert.

Durch die in die Gurtaustrittsblende 204 integrierte Umlenkeinheit 216 und die versetzte Anordnung von Gurtaufroller 212 und Gurtaustrittsblende 204 verläuft das Gurtband 202 vom Gurtaufroller 212 in die Gurtaustrittsblende 204 schräg, insbesondere in einem vorgegebenen Neigungswinkel. Hierdurch werden entsprechende Gurtabzugskriterien des Gurtaufrollers 212 einfach und sicher erfüllt.

Mit anderen Worten: Der Gurtaufroller 212 ist innerhalb des Fahrzeugsitzes 100 unterhalb der Gurtaustrittsblende 204 und versetzt zu dieser für einen schrägen Verlauf des Gurtbandes 202 vom Gurtaufroller 212 zum Gurteintrittsbereich 214 der Gurtaustrittsblende 204 angeordnet.

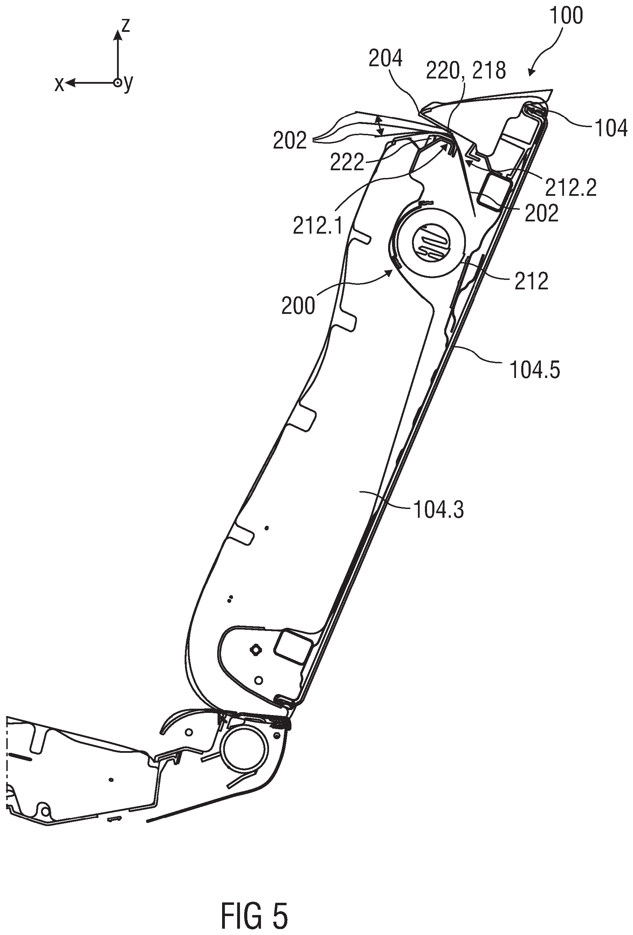

Figur 5 zeigt eine Schnittdarstellung des Fahrzeugsitzes 100 durch die Gurtanordnung 200.

Der Gurtaufroller 212 ist beispielsweise in einem Gehäuse 212.1 angeordnet. Der Gurtaufroller 212 ist über das Gehäuse 212.1 an einer Sitzstruktur 104.5, insbesondere einem Sitzträger, zum Beispiel einem Sitzrahmen oder einer Sitzschale, angeordnet und befestigt.

Zur Stützung und zur Ableitung von einwirkenden Kräften kann die Gurtaustrittsblende 204 mit der Stützstruktur 222 (auch Versteifungsstruktur oder Abstützstruktur genannt) versehen sein. Die Stützstruktur 222 ist insbesondere im Gurtumlenkbereich 218 und/oder in dem Gurtauflagepunkt 220 des Gurtbandes 202 an einer Außenseite der Gurtaustrittsblende 204 angeordnet, um diese zu stützen/abzustützen.

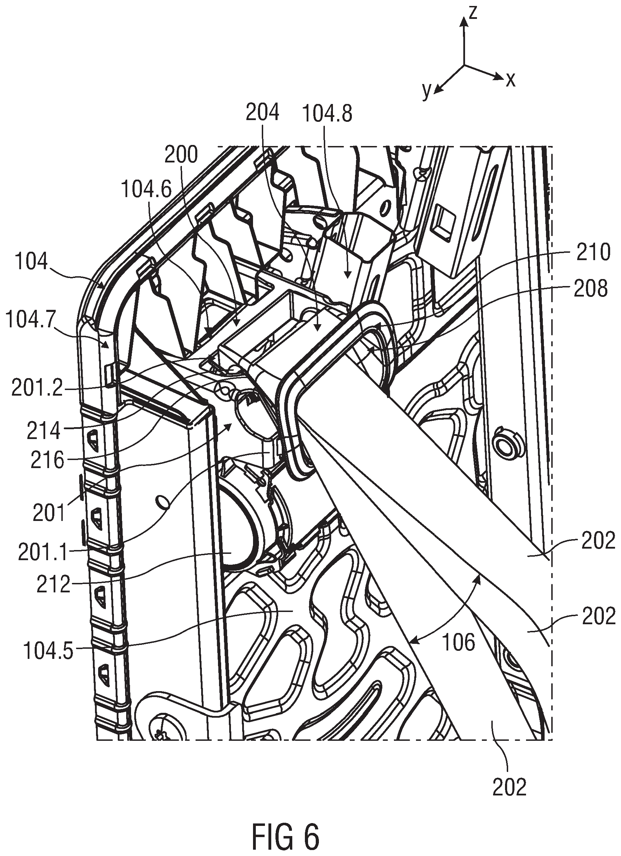

Das Gehäuse 212.1 weist eine obere Ausgangsöffnung 212.2 für das Gurtband 202 auf. Dabei kann die Gurtaustrittsblende 204 lösbar an der oberen Ausgangsöffnung 212.2 befestigbar, insbesondere klemmbar oder klipsbar angeordnet sein. Figur 6 zeigt schematisch eine vergrößerte perspektivische Ansicht der Rückenlehne 104, insbesondere deren Sitzstruktur 104.5, zum Beispiel einer Schalenstruktur, von vorne ohne Polsterung 104.3 (dargestellt in Figur 5) und im Bereich der sitzintegrierten Gurtanordnung 200 mit Gurtaustrittsblende 204 und Gurtaufroller 212 für das variabel verlaufende Gurtband 202 mit den verschiedenen Erstreckungswinkeln 206.

Die Gurtaustrittsblende 204 ist als ein dreidimensionaler Formkörper ausgebildet. Die Gurtaustrittsblende 204 kann L-förmig ausgebildet sein. Der Gurtaustrittsbereich 208 mit dem abschließenden Rand 210 steht senkrecht von der Sitzstruktur 104.5 derart ab, dass der Rand 210 sich plan oder bündig an die in Figur 5 gezeigte Polsterung 104.3 auf deren Vorderseite 104.1 anlegt.

Der Gurteintrittsbereich 214 (auch in Figur 4 dargestellt) kann abgewinkelt nach unten in Richtung des Gurtaufrollers 212 ausgebildet sein.

Die Gurtaustrittsblende 204 kann als ein Hohlkörper und teilweise offen ausgebildet sein.

Die Rückenlehne 104 umfasst zumindest eine Anbindungsstelle 104.6, an welcher der Abstandshalter 201 für die Gurtaustrittsblende 204 angebracht ist. Die Anbindungsstelle 104.6 ist beispielsweise in einem oberen Rückenlehnenbereich zwischen einer Außenkante 104.7 und einer Kopfstützenhalterung 104.8 ausgebildet.

Beispielsweise kann der Abstandshalter 201 senkrecht oder nahezu senkrecht von der Rückenlehne 104, insbesondere nach vorne gerichtet, abstehen und an dieser hinten, insbesondere an einem Rahmen oder einer Schale, befestigt sein. Mittels eines solchen von der Rückenlehne 104 senkrecht nach vorne oder nahezu senkrecht nach vorne abstehenden Abstandshalters 201 kann sichergestellt werden, dass der als Umlenkeinheit 216 ausgebildete Gurteintrittsbereich 214 (dargestellt in Figur 4), insbesondere deren Gurtumlenkbereich 218 und/oder deren Gurtauflagepunkt 220, der Gurtaustrittsblende 204 zur Rückenlehnenebene nach vorne versetzt angeordnet ist. Mit anderen Worten: Der Gurtumlenkbereich 218 und/oder der Gurtauflagepunkt 220 sind/ist mittels des Abstandshalters 201 nach vorne versetzt und zur Rückenlehne 104 beabstandet angeordnet.

Beispielsweise kann der Abstandshalter 201 als ein U-förmiger Abstandsbügel 201.1 ausgebildet sein. Zusätzlich kann der Abstandshalter 201 als Abstützung dienen. Hierzu kann der Abstandshalter 201 beispielsweise hinreichend fest und stabil ausgebildet sein. Beispielsweise kann der Abstandshalter 201 aus Metall gefertigt sein. Die Gurtaustrittsblende 204 kann insbesondere aus einem Kunststoffmaterial gefertigt sein.

Zusätzlich kann der Abstandshalter 201 eine vordere Aufnahme 201.2 aufweisen, die eingerichtet ist, den Gurteintrittsbereich 214 der Gurtaustrittsblende 204 lösbar zu halten.

Figur 7 zeigt schematisch eine vergrößerte perspektivische Ansicht der Rückenlehne 104 von hinten ohne Polsterung 104.3 (dargestellt in Figur 5) und im Bereich der sitzintegrierten Gurtanordnung 200 mit Gurtaustrittsblende 204 und Gurtaufroller 212 für das Gurtband 202.

Alternativ kann der Abstandshalter 201 als zwei L-förmige Abstandsarme 201.3 ausgebildet sein. Diese Abstandsarme 201.3 können optional über einen Steg 201.4 verbunden sein.

Insbesondere können der Abstandshalter 201 und die Gurtaustrittsblende 204 zueinander korrespondierende Verbindungselemente 226, 228, insbesondere Rastelemente, zum Beispiel Rasthaken und Rastaufnahmen, Klipselemente, zum Beispiel flexible Klipsarme und Klipsaufnahmen, oder dergleichen aufweisen. Insbesondere kann/können der Gurteintrittsbereich 214 und/oder der Gurtaustrittsbereich 208 als Stützstruktur 222 außenseitig mit einer Rippenstruktur 222.1 und/oder Verstärkungen 222.2 versehen sein. Gleichzeitig kann der Abstandshalter 201 zur Stützung des Gurteintrittsbereichs 214 korrespondierend in Form, Abmessung und/oder Größe entsprechend ausgebildet sein. Insbesondere kann der Abstandshalter 201 bereichsweise keilförmig oder schräg ausgebildet sein. Dabei können sich die Rippenstruktur 222.1 und/oder Verstärkungen 222.2 auf dem äußeren Abstützbereich des Abstandshalters 201 abstützen oder an diesem anliegen.

Innenseitig kann die Gurtaustrittsblende 204 hinsichtlich einer Führung des Gurtbandes 202 optimiert, insbesondere mit einer Gleitfläche, insbesondere einer reibungsfreien oberen Innenschicht, ausgestaltet sein. Mit anderen Worten: Eine Innenfläche der Gurtaustrittsblende 204 kann als Gleitfläche ausgebildet und/oder eine Außenfläche der Gurtaustrittsblende 204 kann mit der Stützstruktur 222 versehen sein.

Zusätzlich kann eine Seite 204.1, insbesondere eine Unterseite, der Gurtaustrittsblende 204 eine durchgehende Montageausnehmung 204.2, insbesondere einen Schlitz zur Montage oder Demontage des Gurtbandes 202 in die Gurtaustrittsblende 204, umfassen. Die Montageausnehmung 204.2 ist insbesondere als ein durchgehender Schlitz ausgebildet und insbesondere derart bemessen, dass das Gurtband 202 von außen im Wesentlichen vertikal in die Gurtaustrittsblende 204 einführbar ist oder eingeführt werden kann und innen in der Gurtaustrittsblende 204, insbesondere in dem Gurteintrittsbereich 214, dem Gurtdurchtrittsbereich 224 und dem Gurtaustrittsbereich 208, in eine horizontale Gebrauchslage drehbar ist oder gedreht werden kann.

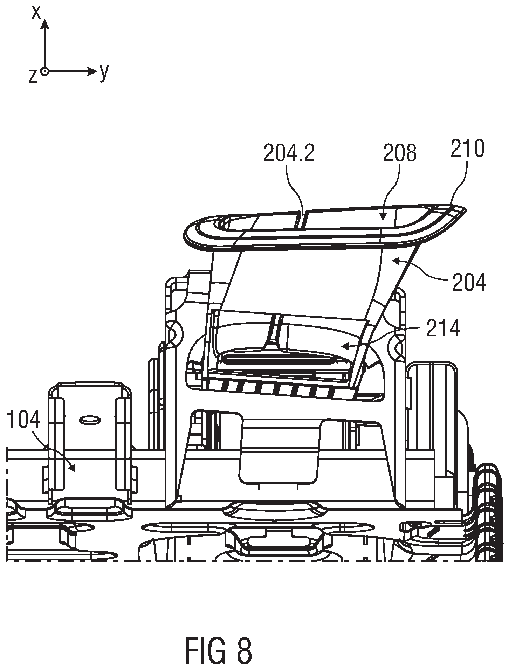

Figur 8 zeigt schematisch eine vergrößerte Draufsicht auf die Rückenlehne 104 ohne Polsterung 104.3, ohne Gurtband 202 (dargestellt in Figur 5) und auf die in die Rückenlehne 104 integrierte Gurtaustrittsblende 204 mit dem den nach außen gerichteten Gurtaustrittsbereich 208 umlaufenden Rand 210, mit der durchgehenden Montageausnehmung 204.2 und dem nach innen gerichteten Gurteintrittsbereich 214, der kleiner als der Gurtaustrittsbereich 208 ausgebildet ist.

### Bezugszeichenliste

- 100: Fahrzeugsitz, rechter Fahrzeugsitz
- 100.1: linker Fahrzeugsitz
- 100.2: mittlerer Fahrzeugsitz
- 100.3: Oberkante
- 102: Sitzteil
- 104: Rückenlehne
- 104.1: Vorderseite
- 104.2: Oberseite
- 104.3: Polsterung
- 104.4: Aufschlagzone
- 104.5: Sitzstruktur
- 104.6: Anbindungsstelle
- 104.7: Außenkante
- 104.8: Kopfstützenhalterung
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)

- 200: Gurtanordnung
- 200.1: herkömmliche Gurtanordnung
- 201: Abstandshalter
- 201.1: U-förmiger Abstandsbügel
- 201.2: Aufnahme
- 201.3: Abstandsarm
- 201.4: Steg
- 202: Gurtband
- 204: Gurtaustrittsblende
- 204.1: Seite
- 204.2: Montageausnehmung
- 206: Erstreckungswinkel
- 208: Gurtaustrittsbereich
- 208.1: unterer Gurtaustrittsbereich
- 208.2: oberer Gurtaustrittsbereich
- 210: Rand
- 212: Gurtaufroller
- 212.1: Gehäuse
- 212.2: Ausgangsöffnung
- 214: Gurteintrittsbereich
- 214.1: Eintrittskante
- 216: Umlenkeinheit
- 216.1: Umlenkpunkt
- 218: Gurtumlenkbereich
- 220: Gurtauflagepunkt
- 222: Stützstruktur
- 222.1: Rippenstruktur
- 222.2: Verstärkung
- 224: Gurtdurchtrittsbereich
- 224.1: oberer Gurtdurchtrittsbereich
- 224.2: unterer Gurtdurchtrittsbereich
- 226, 228: korrespondierende Verbindungselemente

- 300: Sitzanordnung
- 302: vordere Sitzreihe
- 304: hintere Sitzreihe
- 306: breite Sitzfläche
- 308: schmale Sitzfläche
- 310: Rückenlehnenfläche

- 400: Insasse
- 400.1: Kopf

- x: Längsrichtung
- y: Querrichtung
- z: Vertikalrichtung

## Patentansprüche

1. Gurtanordnung (200) mit einem Gurtband (202), einem Gurtaufroller (212) und einer Gurtaustrittsblende (204), durch die das Gurtband (202) führbar ist, wobei die Gurtaustrittsblende (204) einen Gurtaustrittsbereich (208) und einen Gurteintrittsbereich (214) umfasst,
wobei der Gurteintrittsbereich (214) als eine Umlenkeinheit (216) zum Umlenken eines Gurtbandverlaufs ausgebildet ist,
wobei der Gurtaustrittsbereich (208) einen größeren Querschnitt als der Gurteintrittsbereich (214) aufweist.

2. Gurtanordnung (200) nach Anspruch 1,
wobei das Gurtband (202) in einem zwischen dem Gurteintrittsbereich (214) und dem Gurtaustrittsbereich (208) vorgesehenen Gurtdurchtrittsbereich (224) reibungsarm führbar oder geführt ist.

3. Gurtanordnung (200) nach Anspruch 2,
wobei sich der Gurtdurchtrittsbereich (224) im Längsschnitt der Gurtaustrittsblende (204) trichterförmig öffnet.

4. Gurtanordnung (200) nach Anspruch 2 oder 3,
wobei der Gurteintrittsbereich (214), der Gurtdurchtrittsbereich (224) und der Gurtaustrittsbereich (208) jeweils im Querschnitt schlitzförmig und mit variierender Querschnittsgröße ausgebildet sind.

5. Gurtanordnung (200) nach einem der vorhergehenden Ansprüche,
wobei die Gurtaustrittsblende (204), außenseitig mit einer Stützstruktur (222) versehen ist.

6. Gurtanordnung (200) nach einem der vorhergehenden Ansprüche ,
wobei der Gurteintrittsbereich (214) im Schnitt eine abgewinkelte oder bogenförmige Eintrittskante (214.1) umfasst, welche einen Gurtumlenkbereich (218) und/oder einen Gurtauflagepunkt (220) bildet.

7. Gurtanordnung (200) nach einem der vorhergehenden Ansprüche,
umfassend einen Abstandshalter (201), der eingerichtet ist, die Gurtaustrittsblende (204) lösbar zu halten.

8. Gurtanordnung (200) nach Anspruch 6 oder 7,
wobei die Gurtaustrittsblende (204) eingerichtet ist, dass das Gurtband (202) mit unterschiedlich großen Erstreckungswinkeln (206) relativ zu dem Gurtumlenkbereich (218) und/oder oder zu dem Gurtauflagepunkt (220) aus dem Gurtaustrittsbereich (208) austritt.

9. Gurtanordnung (200) nach einem der Ansprüche 6 bis 8,
wobei die Gurtaustrittsblende (204) eingerichtet ist, das Gurtband (202) in dem entsprechenden Gurtumlenkbereich (218) und/oder in dem Gurtauflagepunkt (220) zu stützen.

10. Gurtanordnung (200) nach einem der vorhergehenden Ansprüche,
wobei eine Seite (204.1) der Gurtaustrittsblende (204) eine Montageausnehmung (204.2) zur Montage oder Demontage des Gurtbandes (202) umfasst.

11. Rückenlehne (104) mit einer Gurtanordnung (200) nach einem der vorhergehenden Ansprüche.

12. Rückenlehne (104) nach Anspruch 11,
umfassend eine Anbindungsstelle (104.6), an welcher ein Abstandshalter (201) angebracht ist.

13. Rückenlehne (104) nach Anspruch 12,
wobei der Abstandshalter (201) senkrecht abstehend von der Rückenlehne (104) an dieser befestigt ist und als ein U-förmiger Abstandsbügel (201.1) oder zwei L-förmige Abstandsarme (201.3) ausgebildet ist.

14. Rückenlehne (104) nach Anspruch 12 oder 13,
wobei der Abstandshalter (201) eine vordere Aufnahme (201.2) aufweist, die eingerichtet ist, den Gurteintrittsbereich (214) der Gurtaustrittsblende (204) lösbar zu halten.

15. Fahrzeugsitz (100), umfassend eine Rückenlehne (104) nach einem der Ansprüche 11 bis 14.
